# EUROPEAN PATENT APPLICATION

(11) **EP 1 655 325 A2**
(43) Date of publication of application: **10.05.2006**
(21) Application number: 05003485.9
(22) Date of filing: 18.02.2005
(51) Int. Cl.: C08J 3/20, B05D 1/00

(54) **Method of applying a mixture of resin and thermoplastic material with added nano-silver powder**

(30) Priority: 09.11.2004 KR 2004090651
(71) Applicant: Dooil Co., Ltd.,, Hwaseong-si, Kyungki-do 445-894 (KR)
(72) Inventor: Sun, Hyun-Dee, Hwaseong-si Kyungki-do 445-894 (KR)
(74) Representative: Beetz & Partner

(57) **Abstract**

Disclosed herein is a method of applying a mixture of resin and thermoplastic material with added nano-silver powder using ultrasonic waves, including mixing nano-silver powder and a resin with added thermoplastic material using an ultrasonic homogenizer to prepare a mixture, periodically pumping the mixture to prevent precipitation of the nano-silver powder out of the mixture due to a difference in specific gravity between the nano-silver powder and the resin with added thermoplastic material, and applying the pumped mixture onto a predetermined target. Also, the method of the current invention further includes diluting the mixture with the same resin with added thermoplastic material as the resin with added thermoplastic material used in the mixture, before the pumping.

## Description

### BACKGROUND OF THE INVENTION

### 1. Field of the Invention

The present invention relates, in general, to a method of applying a mixture of resin and thermoplastic material with added nano-silver powder using ultrasonic waves, and, more specifically, to a method of applying a mixture of resin and thermoplastic material with added nano-silver powder in which the mixing of the nano-silver powder and the resin with added thermoplastic material is performed by an ultrasonic dispersion process.

### 2. Description of the Related Art

With great advances in industrialization, people are increasingly interested in their health.

Silver, which has value as a precious metal, is environmentally friendly, and has no toxicity when a small amount thereof is used, and also, can exhibit various properties, such as antibacterial, sterilizing, antifungal, deodorizing, far infrared ray emission and electromagnetic shielding properties, which may persist for a long period. Thus, silver is regarded to be beneficial to human beings and the environment.

In recent years, silver, having the above properties, has been used in appliances, and cosmetic and flooring products.

As such, silver is applied according to two methods, one in which silver powder is included in the product, the other in which it is applied on a surface of the product.

In cases where silver is included in the product, since the silver component is not exposed externally, it is difficult to manifest the desirable properties of silver. Therefore, it is preferable that silver be applied on the product.

In this regard, a method of applying silver on products is disclosed in Korean Patent Laid-open Publication No. 2003-0036490, in which a film composition comprising hot melt polyurethane and nano-sized or micro-sized silver particles is provided. The composition has 70-98 wt% hot melt polyurethane and 20-200 ppm silver particle colloid. When this composition is applied on a product, it can exhibit environmentally friendly properties and is harmless to human beings. However, upon adding the nano-silver powder to polyurethane, it is difficult to form a uniform mixture. Hence, the above invention is disadvantageous because the silver component in the composition cannot be uniformly distributed on the coated product.

Likewise, Korean Patent Laid-open Publication No. 2002-0028026 discloses an improvement of a process of mixing an organic silicon compound, a filler, and a solvent using an ultrasonic dispersion technique. However, the above invention has the disadvantages of precipitation of the organic silicon compound due to a difference in specific gravity between the organic silicon compound and the solvent, and the use of the additional filler to achieve uniform mixing of the organic silicon compound and the solvent.

### SUMMARY OF THE INVENTION

Accordingly, the present invention has been made keeping in mind the above problems occurring in the related art, and an object of the present invention is to provide a method of applying a mixture of resin and thermoplastic material with added nano-silver powder using ultrasonic waves, in which the nano-silver powder is mixed with the resin with added thermoplastic material so as not to crush the nano-silver particles.

Another object of the present invention is to provide a method of applying a mixture of resin and thermoplastic material with added nano-silver powder using ultrasonic waves, in which the nano-silver particles, which have higher specific gravity than the resin with added thermoplastic material, are prevented from precipitating out of the mixture of resin and thermoplastic material with added nano-silver.

A further object of the present invention is to provide a method applying a mixture of resin and thermoplastic material with added nano-silver powder using ultrasonic waves, in which the time required to mix the nano-silver and the resin with added thermoplastic material is reduced by using a dilution process.

In order to accomplish the above objects, the present invention provides a method of applying a mixture of resin and thermoplastic material with added nano-silver powder using ultrasonic waves, comprising: mixing nano-silver powder and a resin with added thermoplastic material using an ultrasonic homogenizer, to prepare a mixture; periodically pumping the mixture to prevent precipitation of the nano-silver powder out of the mixture due to the difference in specific gravity between the nano-silver powder and the resin with added thermoplastic material; and applying the pumped mixture onto a predetermined target.

In the method of the present invention, the nano-silver powder and the resin with added thermoplastic material are mixed preferably at a weight ratio of 1:500, and more preferable 1:1000.

Also, the method of the present invention may further comprise diluting the mixture with the same resin with added thermoplastic material as the resin with added thermoplastic material used in the mixture, in an amount 5 times greater than the amount of the mixture, preferably in an amount 7 times greater than the amount of the mixture.

Further, the resin with added thermoplastic material comprises preferably 30-35 wt% thermoplastic material and 65-70 wt% resin.

Preferably, the thermoplastic material is at least one of the following: acryl, vinyl, PVC, and a UV coating solution or a material based on one of these thermoplastics or a mixture thereof.

### DESCRIPTION OF THE PREFERRED EMBODIMENTS

According to a preferred embodiment of the present invention, tiles are coated by mixing nano-silver powder and a resin with added thermoplastic material using an ultrasonic homogenizer to obtain an ultrasonically suspended mixture, periodically pumping the mixture to prevent precipitation of the nano-silver powder, and loading the pumped mixture into a T-die, followed by applying the mixture on the surface of the tiles using a pair of compressive rollers.

As such, in the process of mixing the nano-silver powder and the resin with added thermoplastic material, the nano-silver particles are ultrasonically suspended in the resin with added thermoplastic material.

The nano-silver preferably has a small size of 50 nm, more preferably 30 nm or less. The properties thereof are summarized in Table 1, below.

### TABLE 1

Properties of Nano-Silver

| Properties | |
|---|---|
| Size | 50 nm or less |
| Solubility | No |
| Boiling Point | 2,210°C |
| Melting Point | 961°C |
| Explosivity, Oxidativity | No |
| Specific Gravity | 10.49 |
| Purity | 99.99% |

Used in the present invention, the resin is not a chemically synthesized resin but a naturally obtained resin, and has properties, such as non-crystallinity and non-volatility. In addition, the resin, which is insoluble in water, is readily soluble in alcohol and ether, and it is used with added thermoplastic material.

In this case, the thermoplastic material is selected from among acryl, vinyl, PVC, and a UV coating solution.

The resin with added thermoplastic material has, preferably, 30-35 wt% thermoplastic material and 65-70 wt% resin. That is, the thermoplastic material in the resin with added thermoplastic material has a concentration of 30-35 wt%.

If the concentration is less than 30 wt%, the viscosity is too low and the resin may be easily separated from the tile. Meanwhile, if the concentration is higher than 35 wt%, it is difficult to perform the application process on the tile due to very high viscosity.

The mixing process of the nano-silver powder and the resin with added thermoplastic material using the ultrasonic homogenizer according to the present invention does not crush the nano-silver particles, unlike a conventional method of physically mixing nano-silver particles and resin. Thus, the unique properties of the nano-silver powder are retained in the present invention.

Moreover, to prevent the precipitation of the nano-silver powder due to the difference in specific gravity between the nano-silver and the resin with added thermoplastic material upon formation of the mixture, it is preferable that the mixture be periodically cycled using a pump for a predetermined time.

After the mixing process is performed for 1 hour, the pumping process is preferably carried out for 5 min.

Then, the mixture of resin and thermoplastic material with added nano-silver powder obtained by ultrasonic dispersion is applied on the surface of the tiles, thereby manifesting the electrostatic decay, electromagnetic shielding, surface sterilization, and antibacterial and deodorizing properties.

The tile on which the mixture of resin and thermoplastic material with added nano-silver obtained by ultrasonic dispersion is applied is measured for surface electric resistance, which is found to be 10³-10¹³ Ω/cm². From this result, it can be confirmed that the nano-silver application exhibits antistatic properties.

Further, with the aim of reducing the time required for the mixing process, the resin with added thermoplastic material and the nano-silver are primarily mixed at a weight ratio of 500:1 by ultrasonic dispersion, to prepare the mixture. Subsequently, the above mixture is diluted with the same resin with added thermoplastic material as the resin with added thermoplastic material used in the mixture, in an amount 5 times greater than the amount of the mixture of resin and thermoplastic material with added nano-silver, before the pumping process.

Hence, it is preferable that the mixing ratio by weight of the nano-silver and the resin with added thermoplastic material be 1:2500. In the present invention, mixing by ultrasonic dispersion is advantageous because the nano-silver particles are uniformly mixed with the resin with added thermoplastic material without being crushed. Thereby, the application of such a mixture on the tiles manifests the unique properties of nano-silver.

Antibacterial activity of the tiles coated by the method of the present invention was tested in accordance with the following procedures at the Korea Testing and Research Institute for Chemical Industry.

### 1. Antibacterial Experiment Method

### (1) Experimental Instrument:

Clean Bench (SAMKITECH Co. Ltd., Korea)
Colony Counter (DukWoo Chemical Co. Ltd., Korea)
Incubator (Memmert GmbH, Germany)

### (2) Test Strain: Escherichia Coli ATCC 25922 Staphylococcus aureus ATCC 6538

### (3) Test Method

Bacteria were incubated, diluted with a 20 times dilute nutrient medium so as to amount to 1-5x10⁵ number/ml, and then used as an inoculum. The test sample was loaded into a sterile petri dish and inoculated with 0.4 ml of the inoculum. Subsequently, the inoculated sample was covered with a film and incubated at 35°C for 24 hours. Most of the bacteria on the sample were recovered using a neutralizing solution in the petri dish, after which the recovered bacterial cell number was counted. As such, Stomacher 400, which was a sterile polybag, was used as the covering film. The bacterial cell number was calculated by multiplying the cell number on the medium by the dilution factor.

### 2. Antibacterial Experiment Results (unit: number/sample)

| Test Strain | Control Sample Directly After Inoculation | Control Sample After 24 Hours | Test Sample After 24 Hours |
|---|---|---|---|
| *E.coli* | 2.6×10⁵ | 8.4x10⁶ | <20 (>99.9%) |
| *S.aureus* | 2.8x10⁵ | 9.0x10⁶ | <20 (>99.9%) |

| | | | |
|---|---|---|---|
| Note: ( ): bacterial reduction (%) = (A-B)/A x 100 Wherein, A: the bacterial cell number of the control sample after 24 hours of incubation (average), and B: the bacterial cell number of the test sample after 24 hours of incubation (average). | | | |

### 3. Experimental Results

The test sample exhibited a high bacterial reduction of 99.9% or more after the test period of 24 hours for Gram-negative *Escherichia coli* and Gram-positive *Staphylococcus aureus.*

As for the tiles coated with the mixture of resin and thermoplastic material with added nano-silver powder using ultrasonic dispersion according to the present invention, the rate of bacterial reduction of 99.9% or more after the test period of 24 hours for Gram-negative *Escherichia coli* and Gram-positive *Staphylococcus aureus* is obtained.

Further, although the case where the silver powder is applied on the tiles or included in the tiles according to conventional techniques has surface resistance of 10¹³-10¹⁵ Ω/cm², the case where the tiles are coated according to the method of the present invention has surface resistance of 10³⁻10¹³ Ω/cm². From this, it appears that the application method of the present invention manifests high antistatic effects.

In this way, although the application method of the present invention is used to tiles, it may also be employed to UV coating, PVC top coating, flooring covered with laminated paper, wallpaper, clothes, fabrics, PU, PP, ABS, wood (MDF), HDF, packaging paper, transfer paper, fabric transfer, interior film sheet, plastics, etc.

As described above, the present invention provides a method of applying a mixture of resin and thermoplastic material with added nano-silver using ultrasonic waves. In the method of the present invention, since the process of mixing the resin with added thermoplastic material and the nano-silver is performed using the ultrasonic homogenizer, the nano-silver particles are prevented from being crushed. Thus, when the above mixture is applied on a desired target, the unique properties of the nano-silver can be maximally exhibited. Further, in cases where the process of applying the mixture takes a long time, the nano-silver particles may precipitate due to the difference in specific gravity between the resin with added thermoplastic material and the nano-silver. Accordingly, the mixture is periodically cycled using a cycling pump, thereby preventing the precipitation of the nano-silver. Furthermore, the process of mixing the resin with added thermoplastic material and the nano-silver particles by ultrasonic dispersion requires a considerably long time. Hence, the resin and the nano-silver are primarily mixed using the ultrasonic homogenizer, after which the above mixture is diluted with the same resin with added thermoplastic material as the resin with added thermoplastic material used in the mixture in an amount 5 times greater than the amount of the mixture. Thereby, the time required for the ultrasonic dispersion treatment can be reduced.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A method of applying a mixture of resin and thermoplastic material with added nano-silver powder using ultrasonic waves, comprising:
mixing nano-silver powder and a resin with added thermoplastic material using an ultrasonic homogenizer, to prepare a mixture;
periodically pumping the mixture to prevent precipitation of the nano-silver powder out of the mixture due to a difference in specific gravity between the nano-silver powder and the resin with added thermoplastic material; and
applying the pumped mixture onto a predetermined target.

2. Method according to claim 1, **characterized in that** the nano-silver powder and the resin with added thermoplastic material are mixed at a weight ratio of 1:500.

3. Method according to claim 1 or 2, **characterized by** further comprising the step of diluting the mixture with a same resin with added thermoplastic material as the resin with added thermoplastic material used in the mixture, in an amount 5 times greater than the amount of the mixture, before the pumping.

4. Method according to at least one of the preceding claims, **characterized in that** the resin with added thermoplastic material comprises 30-35 wt% thermoplastic material and 65-70 wt% resin.

5. Method according to at least one of the preceding claims, **characterized in that** the thermoplastic material is selected from among acryl, vinyl, PVC, and a UV coating solution.
